# EUROPEAN PATENT SPECIFICATION

(11) **EP 3 939 943 B1**
(45) Date of publication and mention of the grant of the patent: **25.06.2025**
(21) Application number: 21184307.3
(22) Date of filing: 07.07.2021
(51) Int. Cl.: C02F 9/00, C02F 1/00, C02F 1/463, C02F 1/66, C02F 1/52, C02F 101/10, C02F 101/20, C02F 101/22, C02F 103/02, C02F 103/10, C02F 103/06, C02F 101/32

(54) **WATER PURIFICATION BY ETTRINGITE PRECIPITATION**
WASSERREINIGUNG MIT DER AUSFÄLLUNG VON ETTRINGITE
PURIFICATION DE L'EAU PAR LA PRÉCIPITATION DE L'ETTRINGITE

(30) Priority: 16.07.2020 SE 2050899
(43) Date of publication of application: 19.01.2022
(73) Proprietor: Axolot Solutions Holding AB, 254 67 Helsingborg (SE)
(72) Inventor: Ragnar, Martin, 136 70 Vendelsö (SE); Nalum, Daniel, 417 06 Göteborg (SE); Holm, Daniel, 433 50 Öjersjö (SE)
(74) Representative: Ström & Gulliksson AB

(56) References cited:
- EP-A1- 2 935 126
- EP-A1- 2 955 161
- EP-A1- 3 110 765
- EP-B1- 2 935 126
- EP-B1- 3 110 765
- TOLONEN EMMA-TUULIA ET AL: "The removal of sulphate from mine water by precipitation as ettringite and the utilisation of the precipitate as a sorbent for arsenate removal", JOURNAL OF ENVIRONMENTAL MANAGEMENT, ELSEVIER, AMSTERDAM, NL, vol. 181, 5 July 2016 (2016-07-05), pages 856 - 862, XP029709763, ISSN: 0301-4797, DOI: 10.1016/J.JENVMAN.2016.06.053

## Description

### Field of the Invention

This invention pertains in general to the field of water treatment. More particularly the invention relates to the treatment of contaminated water containing alkali metal ions and sulfate ions.

### Background

The removal of sulfate ions from a process or water flow is a troublesome issue since most sulfate salts are readily soluble in water. Such flows could include acid rock drainage, acid mine drainage, landfill leachates, recovery boiler precipitator ash leachates, effluents from the modification of starch, heavily contaminated waters and numerous of others.

Calcium sulfate (gypsum) is a salt with a low solubility and this fact usually means that a soluble calcium salt - typically calcium hydroxide - is added to a water flow from which sulfate ions should be removed. Gypsum is formed, but still a substantial concentration of free sulfate ions prevails. One of very few almost insoluble calcium containing salts is ettringite - calcium aluminium sulfate.

In the art, such as in WO 2014/33361, methods are described where gypsum and/or ettringite precipitation is used for sulfate removal. The gypsum and/or ettringite precipitates are stable materials that can be used for landfills. Such precipitates are also adsorbents that will remove metals, such as arsenic, from the waste water, and thus bind these in the landfills. Other relevant documents are EP 2 935 126 A1, EP 3 110 765 A1, EP 2 955 161 A1.

For flows containing not only sulfate ions, but also (toxic) metal ions, such as contaminated water or certain industrial waste waters, such methods will result in a contaminated precipitate potentially considered or classified as hazardous waste rather than as a non-expensive filler material. Therefore, there is a need for novel processes capable of handling this kind of sulfate and (toxic) metal ion containing flows.

### Summary of the Invention

Accordingly, the present invention preferably seeks to mitigate, alleviate or eliminate one or more of the above-identified deficiencies in the art and disadvantages singly or in any combination and solves at least the above mentioned problems by providing a method for removal of sulfate from water contaminated by metal ions and sulfate, comprising: 1) a coagulation step, wherein water contaminated by metal ions and sulfate is treated in an electrocoagulation (EC)-unit, whereby metal ion contaminants are precipitated as a metal ion fraction, wherein the water contaminated by metal ions and sulfate optionally is subject to a neutralization step before being treated in the electrocoagulation (EC)-unit, wherein an acid or an alkali source is added to the contaminated water to adjust the pH to the range of 4 to 7; 2) a first fractionation step, wherein the metal ion fraction of step 1) is separated from the treated water to provide metal depleted water; 3) a gypsum precipitation step, wherein a calcium source is added to the metal depleted water of step 2), whereby gypsum is precipitated; 4) a second fractionation step, wherein the precipitated gypsum fraction of step 3) is separated from treated water to provide sulfate and metal depleted water; 5) an ettringite precipitation step, wherein a calcium and aluminum source, such as calcium aluminate, is added to the sulfate and metal depleted water to promote ettringite precipitation; 6) a third fractionation step, wherein the precipitated ettringite of step 5) is separated from the water, to provide purified water.

Further provided but not forming part of the invention is a system (100, 200) for removal of sulfate in contaminated water, comprising: an inlet (1) for untreated contaminated water, an outlet (2) for treated water, an outlet for a metal fraction (3), an outlet for gypsum fraction (4), and an outlet for an ettringite fraction (5); an electrocoagulation (EC)-unit (6), for precipitating and separating metal contaminants as a metal fraction; a gypsum precipitation reservoir (7), for precipitating and separating clean gypsum treated water, wherein a calcium source, such as calcium hydroxide or lime, is added; and an ettringite precipitation reservoir (8), for ettringite precipitation and separation leaving purified water, wherein the pH and amount of Ca-ions are measured and a stoichiometric amount of a calcium and aluminum source, such as Ca(OH)2 and calcium aluminate, is added to the water..

### Brief Description of the Drawings

These and other aspects, features and advantages of which the invention is capable of will be apparent and elucidated from the following description of embodiments of the present invention, reference being made to the accompanying drawings, in which;
Figure 1 shows a schematic of one embodiment of the method of the invention;

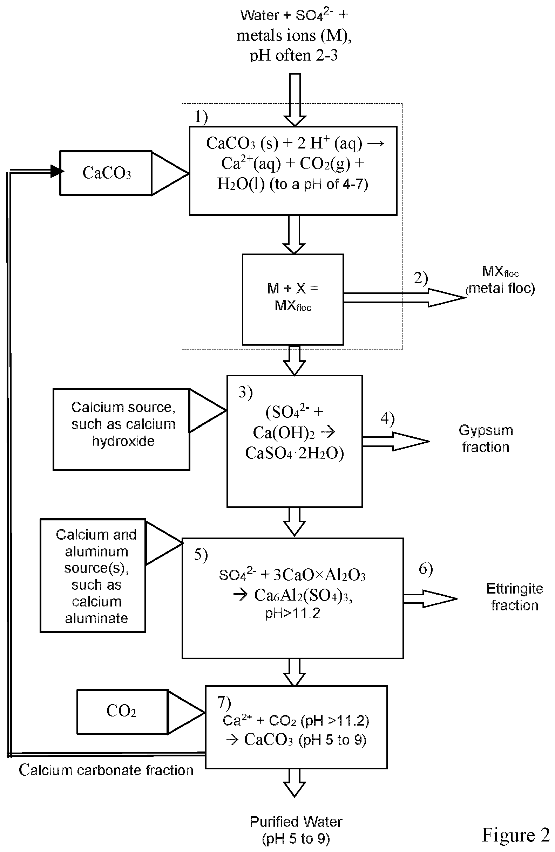

Figure 2 shows a schematic of one embodiment of the method of the invention;

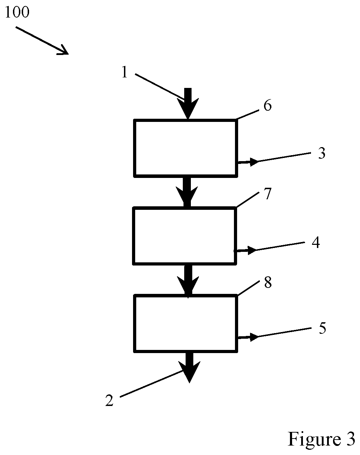

Figure 3 shows a schematic of a system not part of the invention; and

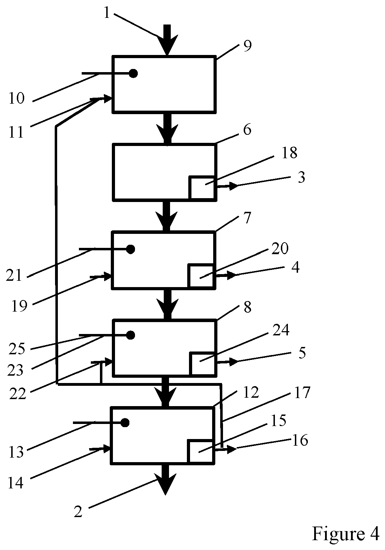

Figure 4 shows a schematic of another aspect of the system not part of the invention.

### Detailed embodiments

The current invention relates to a purification method of water comprising sulfate and (toxic) metal ions, especially (toxic) transition metal ions, and/or oil/fat in emulsified or dispersed form and/or other hazardous yet coagulable dissolved substances.

The method of the invention utilizes gypsum and ettringite precipitation for the removal of sulfate. The gypsum and ettringite precipitates are stable materials, which may be used e.g. in landfills or in paper coatings (gypsum) or concrete (ettringite). Such precipitates are also adsorbents that will remove metal ions, from the waste water, and thus bind these in the landfills. For waters containing both (toxic) metal ions and sulfate, such as certain industrial waste waters, for instance with poisonous arsenic content, existing methods have resulted in a contaminated precipitate calling for the safe disposal as hazardous waste, which come at a cost. In the invention, it is desired to get a clean gypsum faction, which if clean of contaminants may be reused as plasterboard, paper coating, soil improvers, etc. instead of being safely disposed of.

Ettringite is a hydrous calcium aluminium sulfate material with formula: Ca₆Al₂(SO₄)₃(OH)₁₂·26H₂O. Ettringite may form in concrete, and can be used as filling material and as an improvement additive in concrete. Ettringite forms in concrete and is considered to be problematic due to the volume change it creates in the hardening material and thus generating cracks. Ettringite that is added to the mixture before the hardening is not to be compared with the Ettringite formed during hardening. If ettriginte is formed without absorbing unwanted substances, such clean ettringite, may also be used for such purposes.

Clean gypsum and ettringite fractions can be achieved by treating a contaminated water or waste water containing essentially calcium, sulfate and constituents that will not precipitate, such as shorter alcohols or halide ions. However, for contaminated waters with alkali metals (esp. (toxic) metal ions) and/or other undesirable constituents that will be absorbed into the gypsum and/or ettringite precipitates, standard methods would not yield clean gypsum or ettringite.

Thus, in the invention, it is possible to obtain a clean ettringite fraction, even from a contaminated water source comprising (toxic) metal ions.

In the invention, the contaminated water or waste water may by neutralized if needed, e.g. if the waste water is acidic. This neutralization is preferably carried out using non-expensive calcium carbonate, which also does not cause more than a moderate pH rise so that a pH around neutral (e.g. 5 to 9) rather than very alkaline, such as > 10, is achieved. This means that metal ions will essentially remain in solution. This is important for the following step.

The (optionally neutralized) contaminated water is treated with an electrocoagulation (EC)-unit, whereby the (toxic) metal ions and/or oil/fat in emulsified or dispersed form and/or other coagulable dissolved substances form a small and compact floc, which is readily separated in a first fractionation step, leaving metal depleted water.

In electrocoagulation, a voltage is applied to the contaminated water causing a change in the repulsion of the particles through a change in their surface charge. The voltage also gives rise to an electric current between the electrodes in such a way that metal ions are let into solution through a gradual breakdown (oxidation) of the sacrificial electrode, causing dissolved and suspended matter to agglomerate. It effectively removes suspended solids to sub-micrometer levels, breaks emulsions such as oil and grease or latex, and oxidizes and coagulates (toxic) metal ions such that they can be removed from the water without the use of filters or the addition of separation chemicals. Accompanying electrolytic reactions evolve gas (usually as hydrogen bubbles) at the cathode, which also will help the agglomerates to float, helping floc separation.

Gypsum precipitation is many times very limited as polyelectrolytes present in the water can prevent precipitation of gypsum, but not ettringite precipitation. EC as pretreatment will reduce the level of polyelectrolytes hindering the gypsum formation and thus enable the subsequent gypsum precipitation proceeding a final ettringite precipitation step.

The metal depleted water is led to a gypsum precipitation step, wherein a calcium source, e.g. calcium hydroxide, is added to the treated water. By adding calcium, gypsum is precipitated (SO₄²⁻ + Ca(OH)₂ → CaSO₄×2H₂O). The precipitated gypsum is separated from the treated water in a second fractionation step, leaving sulfate and metal depleted water. Given the preceding electrocoalgulation step, the precipitated gypsum is precipitated as clean gypsum, i.e. it is essentially free form contaminants, e.g. alkali metals.

Following the gypsum precipitation and separation, an aqueous solution comprising calcium and aluminum is added to the sulfate and metal depleted water. The aqueous solution comprising calcium and aluminum typically comprises calcium aluminate or tricalcium aluminate (3CaO×Al₂O₃). Further, it may also comprise an additional source of calcium, e.g. calcium oxide, calcium hydroxide, or a mixture of the two, since the mixture is likely to be stoichiometrically deficient in calcium in relation to the formation of the desired precipitate ettringite (Ca₆Al₂(SO₄)₃)), preferably. It is also possible to consider other calcium salts for this action, but since the pH should usually be raised further at this stage to reach >11.2 it is efficient to use an alkaline calcium source, e.g. calcium oxide, calcium hydroxide, or a mixture of the two.

The ettringite formation is driven by the excess of calcium and aluminium ions in the solution with respect to sulfate ions. It was found that a molar ratio of aluminium to sulfate within the range of 1:2 to 1:1, preferably 2:3 to 1:1, is desirable and will be very successful at removing sulfate in the form of solids.

Formation of ettringite in the treated water will consume calcium and aluminium ions. Some of the calcium aluminium sulfate solids may not be ettringite, and all the sulfate may not be removed if there is not enough calcium and aluminium ions present, but generally the solids will be readily separated by settling, flocculation, filtration and the like along with the ettringite and ettringite-like materials. Finally, the precipitated ettringite fraction is removed from the water in a third fractionation step, leaving purified water, i.e. purified from sulfate and (toxic) metal ions contaminants along with possible oil/fat in emulsified or dispersed form and/or other coagulable hazardous substances.

Thus, according to the invention, the method for removal of sulfate in water contaminated by metal ions and sulfate, comprises
1) a coagulation step, wherein water contaminated by metal ions and sulfate is treated in an electrocoagulation (EC)-unit, whereby metal ion contaminants are precipitated as a metal ion fraction, wherein the water contaminated by metal ions and sulfate optionally is subject to a neutralization step before being treated in the electrocoagulation (EC)-unit, wherein an acid or an alkali source is added to the contaminated water to adjust the pH to the range of 4 to 7;
2) a first fractionation step, wherein the metal ion fraction of step 1) is separated from the treated water to provide metal depleted water;
3) a gypsum precipitation step, wherein a calcium source is added to the metal depleted water of step 2), whereby gypsum is precipitated;
4) a second fractionation step, wherein the precipitated gypsum fraction of step 3) is separated from treated water to provide sulfate and metal depleted water;
5) an ettringite precipitation step, wherein a calcium and aluminum source, such as calcium aluminate, is added to the sulfate and metal depleted water to promote ettringite precipitation;
6) a third fractionation step, wherein the precipitated ettringite of step 5) is separated from the water, to provide purified water.

In one embodiment, the pH and the amount of Ca-ions are measured in the treated water from step 5), and a stoichiometric amount of calcium aluminate, such as tricalcium aluminate (3CaO×Al₂O₃), and other calcium source is added to the treated water to promote ettringite precipitation by balancing the reaction SO₄²⁻ + 3CaO×Al₂O₃ → Ca₆Al₂(SO₄)₃ and keeping the pH at >11.2.

In one embodiment, the molar ratio of Al³⁺: SO₄²⁻ is approximately from 1:2 to 1:1, preferrably from 2:3 to 1:1.

The ettringite precipitation will progress during a certain time, such as between 5 to 60 minutes. As such, the suspension is given 5, 10, 20, 30, 45, or 60 min to mature before being separated.

It is hypothesized that the coagulation step (wherein the neutralized water is treated in an electrocoagulation (EC)-unit and (toxic) metal ions (along with any oil/fat in emulsified or dispersed form are precipitated) helps the ettringite precipitation. This since it is known that crystal growth rate may drop in the presence of contaminants, and it is further hypothesized that the cleaner water fraction may help growth of larger crystals. Table 2 shows the effective sulfate removal of the method of the invention, where considerable sulfate removal is achieved already at a 10-minute maturation time.

In one embodiment, the retention time in the ettringite precipitation step is less than 3 hours, such as from 5 minutes to 120 minutes, such as from 10 minutes to minutes to 60 minutes.

For the ettringite precipitation to be efficient, seeding using ettringite crystals is preferred. This way, the energy barrier of nucleation is already overcome, and existing ettringite nuclei or crystals may instantly continue to grow. The seedlings may be of very small size (such micron size), and it is generally enough to re-circulate a fluid stream comprising micro-crystals from the maturation chamber to the ettringite precipitation step. It is also possible to feed back separated ettringite crystals from the ettringite fraction to the precipitation step.

In one embodiment, part of the ettringite fraction from step 7) is thus fed back to the ettringite precipitation step 6), to seed the ettringite precipitation.

The separation steps may utilize suitable separation techiques, such as settling, filtering and/or clarification. Multiple separation techniques may be used in parallel, for instance, for ettringite crystals, larger crystals may be separated as ettringite fraction while smaller crystals and while nuclei may be fed back to promote ettringite precipitation.

In one embodiment, the solid-liquid separation is performed by settling, filtering and/or clarification.

The method shows very good removal of metal contaminants, especially transition metal ions in the contaminated water. The IUPAC definition defines a transition metal as an element whose atom has a partially filled d sub-shell, or which can give rise to cations with an incomplete d sub-shell. Transition metals of interest are here defined as Sc, Ti, V, Cr, Mn, Fe, Co, Ni, Cu, Zn, Ga, Ge, As, Y, Zr, Nb, Mo, Tc, Ru, Rh, Pd, Ag, Cd, In, Sn, Sb, La, Ce, Pr, Nd, Pm, Sm, Eu, Gd, Tb, Dy Ho, Er, Tm, Yb, Lu, Hf, Ta, W, Re, Os, Ir, Pt, Au, Hg, Tl, Pb, Bi, Po, Ac, Th, Pa, U, Np, Pu, and Am.

A number of metal ions are more toxic already in ionic form, and are generally referred to as toxic metals. In general, chemicals with LD50 values less than 300 mg/kg are considered highly toxic, those with LD50 values between 300 and 1,000 mg/kg are considered moderately toxic, and those with LD50 values between 1,000 and 5,000 mg/kg are considered slightly toxic.

Especially toxic metal ions the above list include Cd, Pb, As, Hg, Cr, Sb, Te, Tl, Cu, Ni, Sn, Bi, especially Cd, Pb, As, Hg, Cr, Sb, Te, Tl, even more especially Cd, Pb, As, Hg. Several of these contaminants present a problem already at lower levels (elemental arsenic has an LD50 of around 13 mg/kg in humans, but effects of chronic exposure are severe already at a fraction of these levels).

In one embodiment, the contaminated water comprises at least 10 µg/l, such as at least 50 µg/l, such as at least 100 µg/l, such as at least 250 µg/l, such as 500 µg/l, of the contaminant metal ions, and/or In one embodiment, the contaminated water further comprises at least 200 mg/l, such as at least 500 mg/l, such as at least 1000 mg/l of an oil/fat in emulsified or dispersed form.

In one embodiment, the contaminated water comprises from 10 to 1000 µg/l, such as from 50 to 500 µg/l of the contaminant metal ions.

In one embodiment, the contaminant metal ions are especially transition metal ions.

In one embodiment, the transition metal ions are Sc, Ti, V, Cr, Mn, Fe, Co, Ni, Cu, Zn, Ga, Ge, As, Y, Zr, Nb, Mo, Tc, Ru, Rh, Pd, Ag, Cd, In, Sn, Sb, La, Ce, Pr, Nd, Pm, Sm, Eu, Gd, Tb, Dy Ho, Er, Tm, Yb, Lu, Hf, Ta, W, Re, Os, Ir, Pt, Au, Hg, Tl, Pb, Bi, Po, Ac, Th, Pa, U, Np, Pu, and Am.

In one embodiment, the contaminant metal ions are toxic metal ions.

In one further embodiment, the contaminant metals are one or several selected from the group comprising Cd, Pb, As, Hg, Cr, Sb, Te, Tl, Cu, Ni, Sn, Bi. In one further embodiment, the contaminant metals are one or several selected from the group comprising Cd, Pb, As, Hg, Cr, Sb, Te, Tl. In one further embodiment, the contaminant metal ions are one or several selected from the group comprising Cd, Pb, As, Hg.

However, several metal ions are more toxic when included in larger molecules. For instance, although chromium(III) ions are moderately toxic, chromate and dichromate salts containing chromium(VI) are far more toxic. Other such examples include sulfuric acid lead chloride, chromium(III) chloride and arsenic(III) oxide, which are seen in table 1.

In one embodiment, the metal ions are part of molecules, such as in the form of salts, oxyanions or of metal complex ions. In one embodiment, the transition metal ions and/or metalloid metal ions are part of molecules, such as in the form of salts, oxyanions or of metal complex ions.

In table 1 it is shown that Pb, As and Cr metal ions at a concentration of 50 to 100 µg/l, are removed to a large extent from the electrocoagulation step (90 to 99 %), resulting in a very clean outlet water and clean gypsum and ettringite precipitate.

In one embodiment, the gypsum fraction comprises less than 100 ppm, such as less than 50 ppm, such as less than 20 ppm of the contaminant metal ions of the contaminated water.

In one embodiment, the ettringite fraction comprises less than 100 ppm, such as less than 50 ppm, such as less than 20 ppm of the contaminant metal ions of the contaminated water.

The (corresponding amount of) contaminated water refers to the amount of water that is purified to generate the gypsum fraction.

In one embodiment, the metal ions are Pb, As and Cr.

It is noted that the method works for purification of water contaminated by one toxic metal type, or of water contaminated by mixtures of different toxic metals.

The method of the invention is especially preferred if the contaminated water has a high (toxic) metal ion content, such as Cd, Pb, As, Hg, Cr, Sb, Te, Tl, Cu, Ni, Sn, or Bi exceeding 50 µg/l, and/or a poisonous content such as arsenic ion content. This may typically be industrial waste water, such as waste water from the mining industry.

In one embodiment, the contaminated water is industrial waste water.

As can be seen in table 1, the method shows very good removal arsenic ions, even at low levels in the contaminated water, which would leave only low amount of arsenic in gypsum and purified water fractions after purification.

In one embodiment, the metal ions are As, Be, Bi, Pb, Hg, Sn, and/or Th, and the water comprises at least 10 mg/l, such as at least 50 mg/l, such as at least 200 mg/l, of these metal ions.

The contaminated water may also contain other contaminants, such as oils /fats or other carbon sources. If so, the method will also remove of a number of other contaminants, whereby the gypsum separated from the treated water will also contain less of these contaminants, such as any oils/fats or carbon sources in the water. This is positive for making a high quality gypsum fraction containing only low amounts of toxic metals.

In one embodiment, the contaminated water further comprises at least 200 mg/l, such as at least 500 mg/l, such as at least 1000 mg/l, such as from 100 mg/l to 1000 mg/l, of an oil/fat in emulsified or dispersed form. In one further embodiment, oil/fat in emulsified or dispersed form is precipitated along with the metal fraction in step 2).

The treated water may still contain some calcium and have a high pH value after the ettringite precipitation and separation. As such, in one additional step, carbon dioxide may be added to the water to precipitate remaining calcium ions as calcium carbonate and decrease the pH of the outgoing water to a pH in the range of 5 to 9, preferably in the range of 6.0 to 7.5.

In one embodiment, the method thus further comprises a calcium carbonate precipitation and separation step 7), wherein carbon dioxide is added to the purified water to precipitate remaining calcium ions as calcium carbonate and decrease the pH of the outgoing water to a pH in the range of 5 to 9, preferably 6.0 to 7.5, wherein the resulting calcium carbonate fraction is separated from the neutralized purified water.

The neutralized purified water will as such have a pH, which would allow to release or reuse the water without further treatment. Similarly, the acquired calcium carbonate fraction may be used as the alkali source in the first neutralization step or the ettringite precipitation step of the invention.

In one embodiment, the alkali source is calcium carbonate and/or silicate. In one embodiment, the calcium carbonate fraction of step 7) is used as, at least partly, as the alkali source in step 1) of the method.

Reuse of the calcium carbonate fraction in the method of the invention is made possible by the efficient purification of metals in the method, preventing buildup of contaminants through the recycling step.

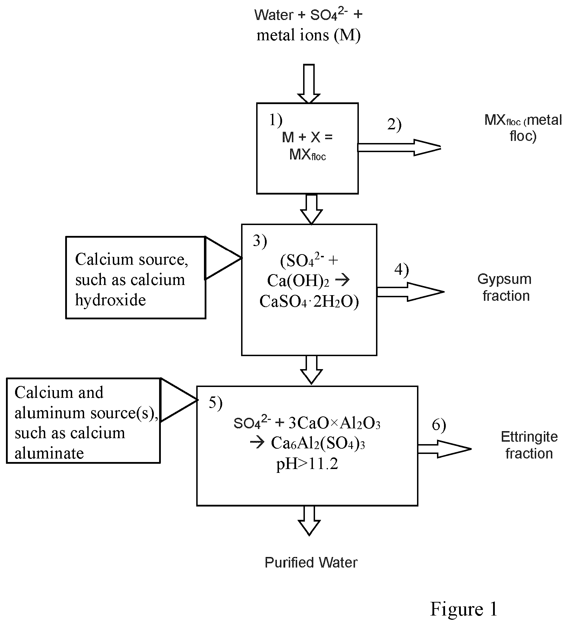

The method of the invention may take place in a relatively simple system, such as shown in figure 1. Such a system contains at least an electrocoagulation (EC)-unit, and a gypsum and ettringite precipitation chamber.

In one aspect, a system 100, 200 for removal of sulphate in contaminated water comprises:
an inlet 1 for untreated contaminated water, an outlet 2 for treated water, an outlet for a metal fraction 3, an outlet for gypsum fraction 4, and an outlet for an ettringite fraction 5;
an electrocoagulation (EC)-unit 6, for precipitating and separating metal contaminants as a transition metal fraction;
a gypsum precipitation reservoir 7, for precipitating and separating clean gypsum treated water, wherein a calcium source, such as Ca(OH)₂, is added;
an ettringite precipitation reservoir 8, for ettringite precipitation and separation leaving purified water, wherein the pH and amount of Ca-ions are measured and a stoichiometric amount of a calcium and aluminum source, such as a stoichiometric amount of Ca(OH)₂ and (3CaO×Al₂O₃), is added to the water.

Preferably, the system also comprises means for measuring and adjusting the pH of the incoming contaminated water. Preferably the pH of the contaminated water is adjusted to a pH of 4 to 7 by addition of an acid or alkali source to the contaminated water.

In one aspect, the system further comprises a first neutralization reservoir 9, for adjusting the pH of the contaminated water to 4 to 7, wherein an acid or alkali source is added to the contaminated water. In one further embodiment, the first neutralization reservoir 9 further comprises a water inlet and a water outlet.

In one aspect, the water inlet of the first neutralization reservoir 9 is the inlet 1 for untreated contaminated water.

In one aspect, the first neutralization reservoir 9 comprises a pH-probe 10, for measuring the pH of the contaminated water, and an inlet for an acid or alkali source 11.

The electrocoagulation (EC)-unit 6, wherein transition metal ions and/or oil/fat in emulsified or dispersed form are flocculated and separated, further comprises a water inlet, a water outlet, a separator 18 and a output for a metal fraction 3 floc. Furthermore, it comprises electrodes over which a current can be lead through the water. Preferably, at least one sacrificing electrode is made of aluminum. The electrochemical aluminum charge is believed to provide efficient seedling, thus enhancing the efficiency of the sulfate removal during ettringite precipitation.

In one aspect, the EC-unit 6 further comprises, a water inlet, a water outlet, and a floc separator 18.

In one aspect, the water inlet of the electrocoagulation (EC)-unit 6 is the input 1 for untreated contaminated water.

In one aspect, the water inlet of the electrocoagulation (EC)-unit 6 is connected to the first neutralization reservoir 9.

In one aspect, the water outlet of the electrocoagulation (EC)-unit 6 is connected to the gypsum precipitation reservoir 7.

The gypsum precipitation reservoir 7 further comprises a water inlet, a water outlet, a calcium source (such as CaCO₃) inlet 19, and a separator 20.

Preferably, the gypsum precipitation reservoir 7 further comprises a SO₄-meter 21, which can assess the sulfate concentration in the water, to enable the addition of a stoichiometric amount of calcium source for optimal gypsum formation.

In one aspect, the gypsum precipitation reservoir 7 further comprises a water inlet, a water outlet, a calcium source inlet 19 and a separator 20. In one further embodiment, the gypsum precipitation reservoir 7 further comprises a sulfate ion-meter 21.

In one aspect, the water inlet of the gypsum precipitation reservoir 7 is connected to the electrocoagulation (EC)-unit 6 and the water outlet to the ettringite precipitation reservoir 8.

The ettringite precipitation reservoir 8 further comprises, an inlet, a reaction volume, an outlet, a calcium and aluminum source(s) (such as 3CaO×Al₂O₃) inlet 22, a pH meter 23, optionally baffles for introducing shearing of the water, and a separator for separating ettringite crystals from the water.

Preferably, the ettringite precipitation reservoir 8 further comprises a sulfate ion-meter 25. This enables near complete sulfate removal by letting the calcium aluminate charge be made sub-stoichiometrically with regards to the aluminium ion concentration in relation to the sulfate concentration by 10 %, based on the sulfate measurement. Also, the pH is measured online to enable adjustment to a pH>11.2.

The retention time of the water in the ettringite precipitation reservoir 8 is preferably controlled by means of an online measurement of the conductivity as precipitating ettringite will not contribute and the conductivity therefore will be a measure of the degree of precipitation. Furthermore, the temperature of the suspension in the ettringite precipitation reservoir 8 may be monitored and controlled such that it is kept below 50 °C.

In one aspect, the ettringite precipitation reservoir 8 further comprises, an inlet, an outlet, an inlet 22 for a calcium and/or aluminum source, such as 3CaO×Al₂O₃, a pH meter 23, optionally baffles for introducing shearing of the water, and a separator 24 for separating ettringite crystals from the water.

In one aspect, the water inlet of the ettringite precipitation reservoir 8 is connected to the gypsum precipitation reservoir 7. In one further embodiment, the water outlet is connected to a neutralization reservoir 12.

In order to precipitate remaining calcium ions as calcium carbonate and decrease the pH of the outgoing water after the ettringite precipitation and separation, the system preferably comprises means for adding carbon dioxide to the purified water for formation and separation of Ca(OH)₂.

In one aspect, the system further comprises a neutralization reservoir 12, for neutralization of the pH and precipitation and separation of calcium ions, wherein carbon dioxide is added to the purified water for formation of Ca(OH)₂. In one further embodiment, the neutralization reservoir 12 comprises a pH probe 13 for measuring the pH of the purified water, and at least one input for adding carbon dioxide 14, a separator 15 for separating formed Ca(OH)₂ and at least one output for Ca(OH)₂ 16.

One further advantage of the invention is that any formed Ca(OH)₂ may be reused within the system. This would both save resources and provide an economical advantage.

In one further aspect, the system further comprises means for feeding formed Ca(OH)₂ 17 to the gypsum precipitation reservoir 7 and/or to an optional first neutralization reservoir 9 for adjusting the pH of the contaminated water to 4 to 7, wherein an acid or alkali source is added to the contaminated water.

The outgoing flow consists of a suspension of ettringite crystals in a water flow. This suspension is given up to 5, 10, 20, 30, 45, 60, 180, or up to 270 min to mature. After maturation, the floc is separated from the water. Part of the floc may be returned to the ettringite precipitation reservoir 8 to function as a seedling for new crystals to form.

The remaining purified water is thus purified from sulfate and (toxic) metal ions contaminants along with possible oil/fat in emulsified or dispersed form and/or other coagulable hazardous substances.

### Materials and Methods and Results / Examples

In order to illustrate the effect of the invention a synthetic wastewater was prepared in the laboratory using sulfuric acid lead chloride, chromium(III) chloride and arsenic(III) oxide. As a neutralizing agent for the sulfuric acid sodium hydroxide was used. However, it turned out difficult to precipitate gypsum in these trials, probably partly due to the high ionic strength of the solution. For this reason the sulfate concentration was instead chosen to be at the level usually reached after gypsum precipitation, being around 1100 mg/l. This water was then pH adjusted to around 6 and run through the pilot through-flow electrocoagulation unit yielding a cleaned water and a floc. Table 1 shows the results of this treatment.

**Table 1. Removal of toxic transition metal ions in step 1.**

| | Incoming water | Outgoing water | Floc [mg/kg TS=ppm] |
|---|---|---|---|
| Sulfate [mg/l] | 1100 | 1050 | n.a. |
| Pb [µg/l] | 100 | <0.2 | 200 |
| As [µg/l] | 50 | 5 | 50 |
| Cr [µg/l] | 100 | 0.7 | 150 |

Following the electrocoagulation treatment, the cleaned water was subjected to treatment with calcium aluminate and using ettringite crystals as seeds. The treatment resulted in a precipitation of ettringite crystals occurring. The ingoing and outgoing waters were analyzed as well as the ettringite precipitate. Table 2 shows the results of this treatment.

**Table 2. Removal of sulfate from water in step 2.**

| | Incoming water | Outgoing water | Precipitate [mg/kg TS=ppm] |
|---|---|---|---|
| Sulfate [mg/l] | 1050 | 130 | n.a. |
| Pb [µg/l] | <0.2 | <0.2 | 15 |
| As [µg/l] | 5 | 0.3 | <2.5 |
| Cr [µg/l] | 0.7 | 0.7 | 13 |

From the results, it is clear that the water was selectively cleaned from the transition metal ions in the electrocoagulation treatment, whereas the sulfate content was little affected. In the second step, the sulfate was effectively removed from the solution and the precipitate was effectively clean from the transition metal ions. As a comparison for the latter it should be noted that the Swedish Environment Protection Agency (Swe: *Naturvårdsverket*) classifies a soil as being contaminated when exceeding 10 ppm As, 50 ppm Pb and 80 ppm Cr - all of which figures are with good marginal undercut by the results in this study.

## Claims

1. A method for removal of sulfate from water contaminated by metal ions and sulfate, comprising:
1) a coagulation step, wherein water contaminated by metal ions and sulfate is treated in an electrocoagulation (EC)-unit, whereby metal ion contaminants are precipitated as a metal ion fraction, wherein the water contaminated by metal ions and sulfate optionally is subject to a neutralization step before being treated in the electrocoagulation (EC)-unit, wherein an acid or an alkali source is added to the contaminated water to adjust the pH to the range of 4 to 7;
2) a first fractionation step, wherein the metal ion fraction of step 1) is separated from the treated water to provide metal depleted water;
3) a gypsum precipitation step, wherein a calcium source is added to the metal depleted water of step 2), whereby gypsum is precipitated;
4) a second fractionation step, wherein the precipitated gypsum fraction of step 3) is separated from treated water to provide sulfate and metal depleted water;
5) an ettringite precipitation step, wherein a calcium and aluminum source, such as calcium aluminate, is added to the sulfate and metal depleted water to promote ettringite precipitation;
6) a third fractionation step, wherein the precipitated ettringite of step 5) is separated from the water, to provide purified water.

2. The method according to claim 1, wherein the water contaminated by metal ions and sulfate comprises at least 10 µg/l, such as at least 50 µg/l, such as at least 100 µg/l, such as at least 250 µg/l, such as 500 µg/l, of the contaminant metal ions, and/or the contaminated water further comprises at least 200 mg/l, such as at least 500 mg/l, such as at least 1000 mg/l of an oil/fat in emulsified or dispersed form.

3. The method according to any one of claims 1 to 2, wherein the gypsum fraction comprises less than 100 ppm, such as less than 50 ppm, such as less than 20 ppm of the contaminant metal ions of the contaminated water, and/or the ettringite fraction comprises less than 100 ppm, such as less than 50 ppm, such as less than 20 ppm of the contaminant metal ions of the contaminated water.

4. The method according to any one of claims 1 to 3, wherein the contaminant metal ions are in the form of free ions, salts, oxyanions and/or metal complex ions, and/or the contaminant metal ions are one or several selected from the group consisting of Cd, Pb, As, Hg, Cr, Sb, Te, Tl, Cu, Ni, Sn, Bi, especially from the group consisting of Cd, Pb, As, Hg, Cr, Sb, Te, Tl, more especially from the group consisting of Cd, Pb, As, Hg.

5. The method according to any one of claims 1 to 4, wherein the pH and amount of Ca-ions are measured in the sulfate and metal depleted water from step 4), and a stoichiometric amount of the calcium and aluminum sources, such as tricalcium aluminate (3CaO×Al₂O₃) and calcium hydroxide, is added to the treated water in the ettringite precipitation step 5) to promote ettringite precipitation by balancing the reaction SO₄²⁻ + 3CaO×Al₂O₃ → Ca₆Al₂(SO₄)₃ and keeping the pH at >11.2.

6. The method according to claim 5, wherein the molar ratio of Al³⁺: SO₄²⁻ is adjusted to approximately from 1:2 to 1:1, preferably from 2:3 to 1:1, and/or the retention time in the ettringite precipitation step 5) is less than 3 hours, such as from 5 minutes to 120 minutes, such as from 10 minutes to 60 minutes.

7. The method according to any one of claims 1 to 6, wherein the method further comprises a calcium carbonate precipitation and separation step 7), wherein CO₂ is added to the purified water to precipitate dissolved lime as calcium carbonate and to decrease the pH of the outgoing water to a pH in the range of 5 to 9, preferably 6.0 to 7.5, wherein the resulting calcium carbonate fraction is separated from the neutralized purified water.

8. The method according to claim 7, wherein the calcium carbonate fraction of step 7) is used, at least partly, as the alkali source in step 1) of the method.

9. The method according to any one of claims 1 to 8, wherein part of the ettringite fraction from step 6) is fed back to the ettringite precipitation step 5), to seed the ettringite precipitation.

## Patentansprüche

1. Verfahren zum Entfernen von Sulfat aus Wasser, das durch Metallionen und Sulfat verunreinigt ist, umfassend:
1) einen Koagulierungsschritt, bei dem das durch Metallionen und Sulfat verunreinigte Wasser in einer Elektrokoagulations (EC)-Einheit behandelt wird, wobei die Metallionenverunreinigungen als Metallionenfraktion ausgefällt werden, wobei das durch Metallionen und Sulfat verunreinigte Wasser gegebenenfalls einem Neutralisierungsschritt unterzogen wird, bevor es in der Elektrokoagulations (EC)-Einheit behandelt wird, wobei dem verunreinigten Wasser eine Säure- oder eine Alkaliquelle zugesetzt wird, um den pH-Wert auf den Bereich von 4 bis 7 einzustellen;
2) einen ersten Fraktionierungsschritt, bei dem die Metallionenfraktion aus Schritt 1) von dem behandelten Wasser abgetrennt wird, um metall-abgereichertes Wasser bereitzustellen;
3) einen Gips-Fällungsschritt, bei dem eine Calciumquelle zu dem metall-abgereicherten Wasser aus Schritt 2) hinzugegeben wird, wodurch Gips ausgefällt wird;
4) einen zweiten Fraktionierungsschritt, bei dem die ausgefällte Gipsfraktion aus Schritt 3) von dem behandelten Wasser abgetrennt wird, um sulfat- und metall-abgereichertes Wasser bereitzustellen;
5) einen Ettringit-Fällungsschritt, bei dem ein Calcium- und Aluminium-Quelle, wie Calciumaluminat, dem sulfat- und metall-abgereicherten Wasser zugesetzt wird, um die Ausfällung von Ettringit zu fördern;
6) einen dritten Fraktionierungsschritt, bei dem das ausgefällte Ettringit aus Schritt 5) vom Wasser getrennt wird, um gereinigtes Wasser bereitzustellen.

2. Verfahren nach Anspruch 1, wobei das durch Metallionen und Sulfat verunreinigte Wasser mindestens 10 µg/l, wie mindestens 50 µg/l, wie mindestens 100 µg/l, wie mindestens 250 µg/l, wie 500 µg/l, der verunreinigenden Metallionen enthält, und/oder das verunreinigte Wasser außerdem mindestens 200 mg/l, wie mindestens 500 mg/l, wie mindestens 1000 mg/l eines Öls/Fetts in emulgierter oder in dispergierter Form enthält.

3. Verfahren nach einem der Ansprüche 1 bis 2, wobei die Gipsfraktion weniger als 100 ppm, wie weniger als 50 ppm, wie weniger als 20 ppm der verunreinigenden Metallionen des verunreinigten Wassers enthält, und/oder die Ettringit-Fraktion weniger als 100 ppm, wie weniger als 50 ppm, wie weniger als 20 ppm der verunreinigenden Metallionen des verunreinigten Wassers enthält.

4. Verfahren nach einem der Ansprüche 1 bis 3, wobei die verunreinigenden Metallionen in Form von freien Ionen, Salzen, Oxyanionen und/oder Metallkomplexionen vorliegen, und/oder die verunreinigenden Metallionen eines oder mehrere sind, ausgewählt aus der Gruppe bestehend aus Cd, Pb, As, Hg, Cr, Sb, Te, TI, Cu, Ni, Sn, Bi, insbesondere aus der Gruppe bestehend aus Cd, Pb, As, Hg, Cr, Sb, Te, TI, ganz besonders aus der Gruppe bestehend aus Cd, Pb, As, Hg.

5. Verfahren nach einem der Ansprüche 1 bis 4, wobei der pH-Wert und die Menge an Ca-Ionen in dem sulfat- und metall-abgereicherten Wasser aus Schritt 4) gemessen werden, und eine stöchiometrische Menge der Calcium- und Aluminiumquellen, wie Tricalciumaluminat (3 CaO x Al2O3) und Calciumhydroxid, in dem Ettringit-Fällungsschritt 5) zu dem behandelten Wasser zugegeben wird, um die Ettringit-Fällung zu fördern, indem die Reaktion
SO42- + 3 CaO x Al2O3 → Ca₆Al2(SO4)₃ ausgeglichen, und der pH-Wert bei +11,2 gehalten wird.

6. Verfahren nach Anspruch 5, wobei das molare Verhältnis von Al3+ : SO42-auf etwa 1:2 bis 1:1, vorzugsweise 2:3 bis 1:1 eingestellt wird, und/oder die Retentionszeit in dem Ettringit-Fällungsschritt 5) weniger als 3 Stunden, beispielsweise von 5 Minuten bis 120 Minuten, wie von 10 Minuten bis 60 Minuten beträgt.

7. Verfahren nach einem der Ansprüche 1 bis 6, wobei das Verfahren außerdem einen Calciumcarbonat-Fällungs- und Abtrennungsschritt 7) umfasst, bei dem CO2 dem gereinigten Wasser zugesetzt wird, um gelösten Kalk als Calciumcarbonat auszufällen, und den pH-Wert des austretenden Wassers auf einen pH-Wert im Bereich von 5 bis 9, vorzugsweise 6,0 bis 7,5 zu senken, wobei die daraus entstehende Calciumcarbonat-Fraktion von dem neutralisierten gereinigten Wasser getrennt wird.

8. Verfahren nach Anspruch 7, wobei die Calciumcarbonat-Fraktion aus Schritt 7) zumindest teilweise als Alkaliquelle in Schritt 1) des Verfahrens verwendet wird.

9. Verfahren nach einem der Ansprüche 1 bis 8, wobei ein Teil der Ettringit-Fraktion aus Schritt 6) in den Ettringit-Fällungsschritt 5) zurückgeführt wird, um die Ettringit-Fällung anzuimpfen.

## Revendications

1. Procédé d'élimination de sulfate à partir d'eau contaminée par des ions métalliques et du sulfate, comprenant :
1) une étape de coagulation, dans laquelle l'eau contaminée par des ions métalliques et du sulfate est traitée dans une unité d'électrocoagulation (EC), selon laquelle des contaminants ions métalliques sont précipités sous forme de fraction d'ions métalliques, dans laquelle l'eau contaminée par des ions métalliques et du sulfate est éventuellement soumise à une étape de neutralisation avant d'être traitée dans l'unité d'électrocoagulation (EC), dans laquelle un acide ou une source alcaline est ajouté(e) à l'eau contaminée pour ajuster le pH à la plage de 4 à 7 ;
2) une première étape de fractionnement, dans laquelle la fraction d'ions métalliques de l'étape 1) est séparée de l'eau traitée pour obtenir une eau appauvrie en métal ;
3) une étape de précipitation du gypse, dans laquelle une source de calcium est ajoutée à l'eau appauvrie en métal de l'étape 2), selon laquelle du gypse est précipité ;
4) une deuxième étape de fractionnement, dans laquelle la fraction de gypse précipité de l'étape 3) est séparée de l'eau traitée pour obtenir une eau appauvrie en sulfate et en métal ;
5) une étape de précipitation d'ettringite, dans laquelle une source de calcium et d'aluminium, telle que de l'aluminate de calcium, est ajoutée à l'eau appauvrie en sulfate et en métal pour favoriser une précipitation d'ettringite ;
6) une troisième étape de fractionnement, dans laquelle l'ettringite précipitée de l'étape 5) est séparée de l'eau, pour obtenir de l'eau purifiée.

2. Procédé selon la revendication 1, dans lequel l'eau contaminée par des ions métalliques et du sulfate comprend au moins 10 µg/l, tel qu'au moins 50 µg/l, tel qu'au moins 100 µg/l, tel qu'au moins 250 µg/l, tel que 500 µg/l, d'ions métalliques contaminants, et/ou l'eau contaminée comprend en outre au moins 200 mg/l, tel qu'au moins 500 mg/l, tel qu'au moins 1 000 mg/l d'une huile/matière grasse sous forme émulsifiée ou dispersée.

3. Procédé selon l'une quelconque des revendications 1 à 2, dans lequel la fraction de gypse comprend moins de 100 ppm, tel que moins de 50 ppm, tel que moins de 20 ppm d'ions métalliques contaminants de l'eau contaminée, et/ou la fraction d'ettringite comprend moins de 100 ppm, tel que moins de 50 ppm, tel que moins de 20 ppm d'ions métalliques contaminants de l'eau contaminée.

4. Procédé selon l'une quelconque des revendications 1 à 3, dans lequel les ions métalliques contaminants sont sous forme d'ions libres, de sels, d'oxyanions et/ou de complexes d'ions métalliques, et/ou les ions métalliques contaminants sont un ou plusieurs sélectionnés dans le groupe consistant en Cd, Pb, As, Hg, Cr, Sb, Te, Tl, Cu, Ni, Sn, Bi, notamment dans le groupe consistant en Cb, Pb, As, Hg, Cr, Sb, Te, Tl, plus particulièrement dans le groupe consistant en Cb, Pb, As, Hg.

5. Procédé selon l'une quelconque des revendications 1 à 4, dans lequel le pH et une quantité d'ions Ca sont mesurés dans l'eau appauvrie en sulfate et en métal de l'étape 4), et une quantité stœchiométrique de sources de calcium et d'aluminium, telles que l'aluminate de tricalcium (3CaO×Al₂O₃) et l'hydroxyde de calcium, est ajoutée à l'eau traitée dans l'étape 5) de précipitation d'ettringite pour favoriser la précipitation d'ettringite en équilibrant la réaction SO₄²⁻ + 3CaO×Al₂O₃ → Ca₆Al₂(SO₄)₃ et en maintenant le pH à >11,2.

6. Procédé selon la revendication 5, dans lequel le rapport molaire de Al³⁺:SO₄²⁻ est ajusté à approximativement de 1:2 à 1:1, de préférence de 2:3 à 1:1, et/ou le temps de séjour dans l'étape 5) de précipitation d'ettringite est inférieur à 3 heures, tel que de 5 minutes à 120 minutes, tel que de 10 minutes à 60 minutes.

7. Procédé selon l'une quelconque des revendications 1 à 6, dans lequel le procédé comprend en outre une étape 7) de précipitation et de séparation de carbonate de calcium, dans laquelle du CO₂ est ajouté à l'eau purifiée pour précipiter de la chaux dissoute en carbonate de calcium et pour diminuer le pH de l'eau sortante à un pH dans la plage de 5 à 9, de préférence 6,0 à 7,5, dans laquelle la fraction de carbonate de calcium résultant est séparée de l'eau purifiée neutralisée.

8. Procédé selon la revendication 7, dans lequel la fraction de carbonate de calcium de l'étape 7) est utilisée, au moins partiellement, en tant que source alcaline à l'étape 1) du procédé.

9. Procédé selon l'une quelconque des revendications 1 à 8, dans lequel une partie de la fraction d'ettringite de l'étape 6) est réintroduite dans l'étape 5) de précipitation d'ettringite, pour amorcer la précipitation d'ettringite.
